(19) Europäisches Patentamt
European Patent Office
Office européen des brevets

(11) Veröffentlichungsnummer: **0 338 426 B1**

(12) # EUROPÄISCHE PATENTSCHRIFT

(45) Veröffentlichungstag der Patentschrift: **02.03.94**

(51) Int. Cl.[5]: **C09B 23/10**, G11B 7/24

(21) Anmeldenummer: **89106598.9**

(22) Anmeldetag: **13.04.89**

(54) **Azulenmethinfarbstoffe sowie optisches Aufzeichnungsmedium, enthaltend die neuen Farbstoffe.**

(30) Priorität: **21.04.88 DE 3813333**

(43) Veröffentlichungstag der Anmeldung:
**25.10.89 Patentblatt 89/43**

(45) Bekanntmachung des Hinweises auf die Patenterteilung:
**02.03.94 Patentblatt 94/09**

(84) Benannte Vertragsstaaten:
**BE CH DE FR GB IT LI NL**

(56) Entgegenhaltungen:
**EP-A- 0 264 198**
**DE-A- 3 320 674**
**JP-A-62 141 536**
**US-A- 4 738 908**

(73) Patentinhaber: **BASF Aktiengesellschaft**
**Carl-Bosch-Strasse 38**
**D-67063 Ludwigshafen(DE)**

(72) Erfinder: **Acker, Michael, Dr.**
**Im Glockenzehnten 45**
**D-6900 Heidelberg(DE)**
Erfinder: **Neumann, Peter, Dr.**
**Poststrasse 28**
**D-6800 Mannheim 31(DE)**
Erfinder: **Schrott, Wolfgang, Dr.**
**Bruesseler Ring 45**
**D-6700 Ludwigshafen(DE)**
Erfinder: **Dust, Matthias, Dr.**
**Teichgasse 7**
**D-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft Azulenmethinfarbstoffe der Formel I

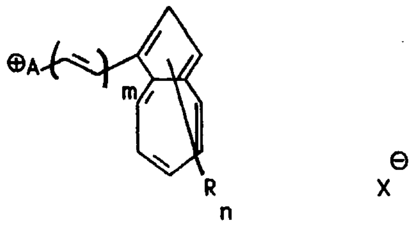

(I)

in der

R $C_1$-$C_6$-Alkyl, das gegebenenfalls durch Halogen, Cyano, Amino oder $C_1$-$C_6$-Alkoxy substituiert ist.
$X^{\ominus}$ ein Anion,
$A^{\oplus}$ einen heterocyclischen Rest der Formel

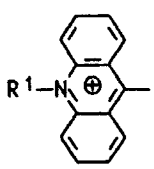

,

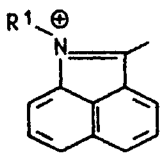

,

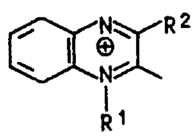

,

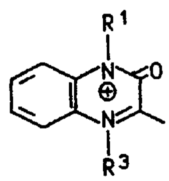

,

(II a) (II b) (II c) (II d)

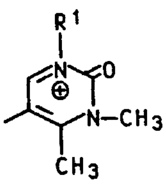

,

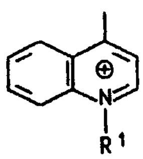

,

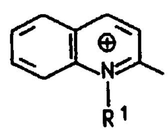

,

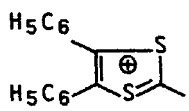

,

(II e) (II f) (II g) (II h)

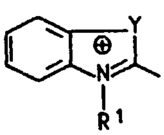

,

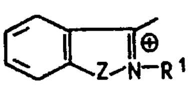

oder

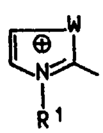

,

(II i) (II j) (II k)

wobei $R^1$ für gegebenenfalls substituiertes und/oder durch ein oder mehrere Sauerstoffatome unterbrochenes $C_1$-$C_{22}$-Alkyl oder gegebenenfalls substituiertes $C_5$-$C_7$-Cycloalkyl, $R^2$ für Wasserstoff, $C_1$-$C_4$-Alkyl oder Cyano, $R^3$ für $C_1$-$C_4$-Alkyl, Y für Stickstoff, Sauerstoff Schwefel, Selen oder $(CH_3)_2C<$ , Z für Schwefel oder Selen und W für Stickstoff Schwefel, Selen oder -CH = CH- stehen und der heterocyclische Rest $A^{\oplus}$ gegebenenfalls weiter substituiert und/oder benzoanelliert ist,

n die Zahl 1, 2 oder 3 und
m die Zahl 1 oder 2 bedeuten, mit der Maßgabe, daß wenn

$A^{\oplus}$ für einen Rest der Formel II f, II g, II i oder II k steht, m die Bedeutung von 2 besitzt.

Die Erfindung betrifft weiterhin ein optisches Aufzeichungsmedium, enthaltend einen Träger und eine gegenüber Laserlicht empfindliche, Farbstoff enthaltende Schicht, wobei der Farbstoff ein Azulenmethinfarbstoff der Formel I ist.

Aufzeichnungsmedien, die mit Strahlen hoher Energiedichte, z. B. Laserlicht, eine lokal begrenzte Zustandsänderung erfahren, sind bekannt. Mit dieser thermisch ausgelösten Zustandsänderung, z. B. Verdampfen, Änderung des Fließverhaltens oder Ausbleichen, ist eine Änderung der optischen Eigenschaften, beispielsweise der Absorption durch Änderung des Absorptionsmaximums oder der Extinktion verbunden, welche zur Information - oder Datenaufzeichnung ausgenutzt werden kann.

Als Lichtquelle für ein optisches Aufzeichnungsmedium eignen sich beispielsweise Halbleiterlaser, die Licht im nahen infrarot emittieren. Festkörper-Injektionlaser, vor allem der AlGaAs-Laser, der im Wellenlängenbereich zwichen etwa 650 und 900 nm arbeitet, sind hierbei besonders zu nennen. Daher besteht besonders Interesse an solchen Aufzeichnungsmaterialien, die Strahlung im Wellenlängenbereich zwischen ca. 650 und 900 nm absorbieren und sich zu dünnen, homogenen Schichten verarbeiten lassen.

So sollen nach der Lehre der JP-A-112 790/1983 sowie der JP-A-125 246/1983 Methinfarbstoffe für diesen Zweck verwendet werden.

Quadratsäurefarbstoffe, die als optische Speichermaterial dienen sind z. B. aus der EP-A-116 381, JP-A-112 792/1983 oder der JP-A-220 143/1983 bekannt. In der DE-A-3 320 674 werden u. a. auch bereits unsymmetrische Methinfarbstoffe mit Azulenresten und Benzoxazol-, Chinolin-, Benzthiazol-, Pyridin-, Lepidin-, 3,3-Dimethylindolenin- oder Benzimidazolgruppen als Speichermaterial beschrieben.

Aufgabe der vorliegenden Erfindung war es, neue strahlungsempfindliche Produkte bereitzustellen, die im Wellenlängenbereich der verwendeten Halbleiterlaser eine gute Reflexion und eine hohe Absorption aufweisen. Sie sollten außerdem in einfacher Weise herzustellen, über einen langen Zeitraum hinweg stabil und in Polymeren leicht löslich sein. Der Erfindung lag weiterhin die Aufgabe zugrunde, ein neues optisches Aufzeichungsmedium bereitzustellen, wobei die die neuen Produkte enthaltenden Schichten homogen sein, eine gute Haftung auf den gebräuchlichen Trägermaterialien aufweisen und über einen langen Zeitraum hinweg stabil sein sollten. Darüber hinaus sollten diese Aufzeichnungsmedien mittels eines Halbleiterlasers beschreibbar und anschließend gut lesbar sein und sich durch ein möglichst hohes Signal : Rausch-Verhältnis auszeichnen.

Demgemäß wurden die eingangs definierten Azulenmethinfarbstoffe der Formel I gefunden.

Außerdem wurde ein optisches Aufzeichnungsmedium, enthaltend einen Träger und eine gegenüber Laserlicht empfindliche, einen Azulenmethinfarbstoff der Formel I enthaltende Schicht, gefunden.

Alle in den obengenannten Resten der Formel I auftretenden Alkylgruppen können sowohl linear als auch verzweigt sein.

Geeignete Reste R sind beispielsweise Methyl, Ethyl,Propyl, Isopropyl, Butyl, Isobutyl, sec-Butyl, tert-Butyl, Pentyl, Isopentyl, Neopentyl, tert-Pentyl, Hexyl, 2-Methylpentyl; Fluormethyl, Chlormethyl, Difluormethyl, Trifluormethyl, Trichlormethyl, 2-Fluorethyl, 2-Chlorethyl, 2-Bromethyl, 1,1,-Difluorethyl, Heptafluorpropyl, 4-Chlorbutyl, 5-Fluorpentyl, 6-Chlorhexyl, Cyanomethyl, 2-Cyanoethyl, 3-Cyanopropyl, 4-Cyanobutyl, 5-Cyanopentyl, 6-Cyanohexyl, 2-Aminoethyl, 2-Aminopropyl, 3-Aminopropyl, 2-Aminobutyl, 4-Aminobutyl, 5-Aminopentyl, 6-Aminohexyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 4-Ethoxybutyl, 2- oder 4-Isopropoxybutyl, 5-Ethoxypentyl oder 6-Methoxyhexyl.

$X^{\ominus}$ in Formel I bedeutet ein Anion. Dabei kommen sowohl anorganische als auch organische Anionen in Betracht. Geeignete Anionen sind z. B. Halogenid, wie Chlorid, Bromid oder Iodid, Sulfat, Perchlorat, Phosphat, Tetrafluoroborat, Trichlorozinkat, Methylsulfonat, Phenylsulfonat, 4-Methylphenylsulfonat, Acetat, Lactat, Salicylat oder Tetraphenylboranat. Erfindungsgemäß sollen auch solche Farbstoffe der Formel I umfasst werden, die Betainstruktur aufweisen, d. h. bei denen die anionische Gruppe Bestandteil des Farbstoffmoleküls ist.

$X^{\ominus}$ kann weiterhin beispielsweise auch ein Anion einer Heteropolysäure auf der Basis Wolfram und/oder Molybdän mit Phosphor, Silicium, Vanadium, Kobalt, Aluminium, Mangan, Chrom und/oder Nickel sein. Weiterhin kommt z. B. auch das Kupfer(I)-hexacyanoferrat-(II)-anion in Betracht.

Die Herstellung der Heteropolysäuren oder der Salze dieser Säuren ist bekannt. Die Säuren werden durch Ansäuern von Lösungen der Wolframate, Molybdate und/oder Vanadate in Form der Alkali- und/oder Ammoniumsalze in Gegenwart von Phosphat und/oder wasserlöslichen Silicaten erhalten. Dabei können durch Wahl des Mol- oder Gewichtsverhältnisses von Wolframat, Molybdat, Vanadat, Phosphat und der Kieselsäure oder von deren Salzen verschiedenartige Heteropolysäuren aufgebaut werden.

Als Beispiele für Heteropolysäuren sind zu nennen: Phosphormolybdänsäure, Silicomolybdänsäure, Phosphorwolframsäure, Silicowolframsäure, Phosphorvanadinsäure, Silicovanadinsäure, Phosphorwolframmolybdänsäure, Silicowolframmolybdänsäure, Phosphor- oder Silicowolframvanadinsäure oder Phosphorsilicowolframmolybdänsäure, die gegebenenfalls noch Vanadin eingebaut enthält.

Wenn der Rest $R^1$ substituiertes $C_1$-$C_{22}$-Alkyl bedeutet, kommen z. B. Hydroxy, Methacryloyloxy, Phenyl, Halogen, Carboxy, Hydroxsulfonyl, $C_1$-$C_4$-Alkanoyl, $C_1$-$C_4$-Alkanoylamino, $C_1$-$C_4$-Alkoxycarbonyl

oder $C_1$-$C_4$-Alkoxycarbonylamino als Substituenten in Betracht. Die Alkylkette kann außerdem durch ein oder mehrere, insbesondere 1 bis 3 Sauerstoffatome unterbrochen sein.

Wenn die heterocyclischen Reste II a- II k weiter substituiert sind, kommen als Substituenten z. B. $C_1$-$C_{12}$-Alkyl, das gegebenenfalls durch ein oder mehrere, insbesondere ein bis 3 Sauerstoffatome unterbrochen ist, Phenyl, Hydroxy, Halogen, dabei insbesondere Chlor oder Brom, $C_1$-$C_{22}$-Alkoxy, $C_1$-$C_{10}$-Alkylthio, Phenylthio, Cyano, Amino, $C_1$-$C_{16}$-Mono-oder Dialkylamino, Pyrrolidino, Piperidino, Morpholino, Piperazino, N-($C_1$-$C_4$-Alkyl)piperazino oder Hydroxysulfonyl in Betracht.

Wenn $R^1$ für substituiertes $C_5$-$C_7$-Cycloalkyl steht, kommen als Substituenten z. B. $C_1$-$C_4$-Alkyl oder Halogen, dabei insbesondere Chlor oder Brom, in Betracht.

Beispielsweise sind für $R^1$ im einzelnen zu nennen: Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl, Heneicosyl, Docosyl (die Bezeichnungen Isooctyl, Isononyl, Isodecyl und Isotridecyl sind Trivialbezeichnungen und stammen von den nach der Oxosynthese erhaltenen Alkoholen [vgl. dazu Ullmanns Enzylopädie der technischen Chemie, 4. Auflage, Band 7, Seiten 215 bis 217, sowie Band 11, Seiten 435 und 436]). Benzyl, 1- oder 2-Phenylethyl, Trifluormethyl, Trichlormethyl, Brommethyl, 2-Bromethyl, 1,1,1-Trifluorethyl, Heptafluorpropyl, 4-Brombutyl, 2-Methoxyethyl, 2-Ethoxyethyl, 2-Propoxyethyl, 2-Butoxyethyl, 2-Benzyloxyethyl, 2-Ethoxypropyl, 3-Ethoxypropyl, 3-Benzyloxypropyl, 3,6-Dioxaheptyl, 3,6-Dioxaoctyl, 3,6-Dioxadecyl, 3,6,9-Trioxadecyl, 4-Oxa-6-ethyldecyl, 3,6-Dioxy-7-phenylheptyl, Propan-2-on-1-yl, Butan-3-on-1-yl, Butan-3-on-2-yl, 2-Ethylpentan-3-on-1-yl, Carboxymethyl, 2-Carboxyethyl, 3-Carboxypropyl, 4-Carboxybutyl, 5-Carboxypentyl, 4-Carboxy-3-oxabutyl, Acetylaminomethyl, 2-(Acetylamino)ethyl, 2-(Propionylamino)ethyl, 2-(Butyrylamino)ethyl, Ethoxycarbonylmethyl, 2-(Ethoxycarbonyl)ethyl, 2- oder 3-(Methoxycarbonyl)propyl, Ethoxycarbonylaminomethyl, 2-(Ethoxycarbonylamino)ethyl, 2-Hydroxyethyl, 2-Hydroxypropyl, 3-Hydroxypropyl, 2-Hydroxybutyl, 4-Hydroxybutyl 5-Hydroxypentyl, 6-Hydroxyhexyl, 7-Hydroxyheptyl, 8-Hydroxyoctyl, 2-Methacryloyloxyethyl, 2- oder 3-Methacryloyloxypropyl, 2- oder 4-Methacryloyloxybutyl, 2-Hydroxysulfonylethyl, 2- oder 3-Hydroxysulfonylpropyl, 2- oder 4-Hydroxysulfonylbutyl, Cyclopentyl, Cyclohexyl, Cycloheptyl, 3-Methylcyclopentyl, 4-Methylcyclohexyl, 4-Ethylcyclohexyl oder 2,3-Dichlorcyclohexyl.

Bevorzugt sind Azulenmethinfarbstoffe der Formel I, in der

- R $C_1$-$C_3$-Alkyl,
- $R^1$ $C_1$-$C_{22}$-Alkyl, das gegebenenfalls durch 1 bis 3 Sauerstoffatome unterbrochen ist, $C_1$-$C_{22}$-Bromalkyl, $C_1$-$C_{12}$-Hydroxyalkyl, $C_1$-$C_{12}$-Methacryloyloxyalkyl, $C_1$-$C_{12}$-Hydroxysulfonylalkyl, $C_1$-$C_6$-Carboxyalkyl oder ($C_1$-$C_4$-Alkoxycarbonyl)-$C_1$-$C_6$-alkyl,
- m die Zahl 1 oder 2 und
- n die Zahl 3 bedeuten.

Weiterhin bevorzugt sind Azulenmethinfarbstoffe der Formel I, in der $A^{\oplus}$ für einen heterocyclischen Rest der Formel II a, II b, II c, II d, II f, II g oder II h steht, der gegebenenfalls jeweils durch Amino oder Hydroxysulfonyl oder insbesondere durch Chlor, Brom oder Phenylthio substituiert ist.

Wenn der Rest $A^{\oplus}$ die Formel II c aufweist, sind solche Farbstoffe der Formel I bevorzugt, in der A für

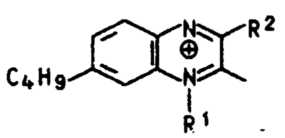

oder

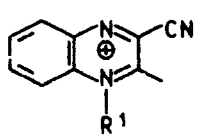

steht, wobei $R^1$ und $R^2$ jeweils die obengenannte Bedeutung besitzen.

Besonders bevorzugt sind Azulenmethinfarbstoffe der Formel I a oder I b

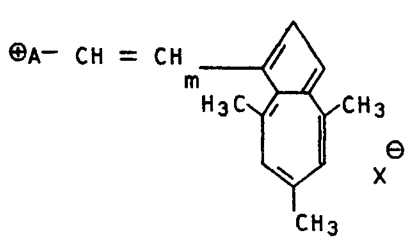

(I a)

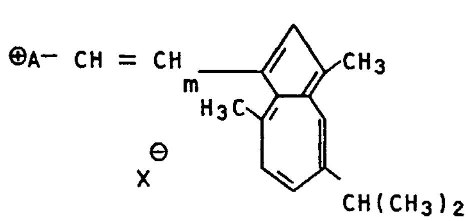

(I b)

in der $A^{\oplus}$, m und $X^{\ominus}$ jeweils die obengenannte Bedeutung besitzen.

Bevorzugte Anionen $X^{\ominus}$ sind Chlorid, Bromid, Iodid, Perchlorat, Tetrafluoroborat, 4-Methylphenylsulfonat, Methylsulfonat oder Tetraphenylboranat.

Die erfindungsgemäßen Farbstoffe der Formel I können beispielsweise durch Kondensation von Cyclammoniumverbindungen der Formel

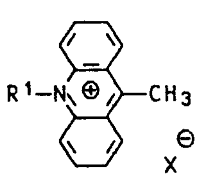 , 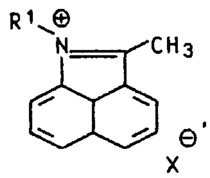 , 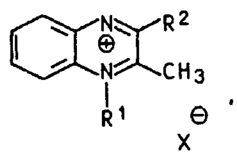 , 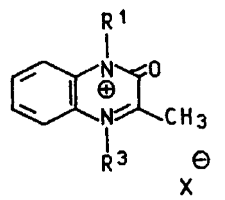 , 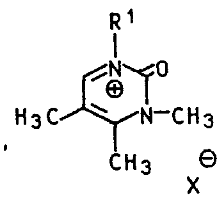

(III a) (III b) (III c) (III d) (III e)

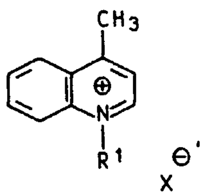 , 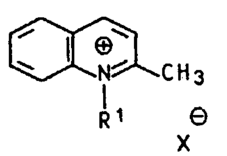 , 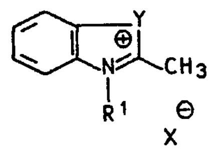 , 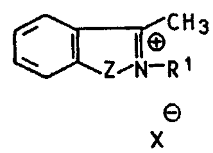 oder 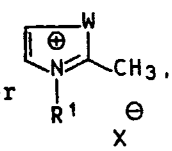

(III f) (III g) (III i) (III j) (III k)

wobei $R^1$, $R^2$, $R^3$, W, Y, Z und $X^{\ominus}$ jeweils die obengenannte Bedeutung besitzen, oder von Verbindungen der Formel

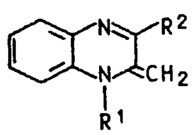 oder 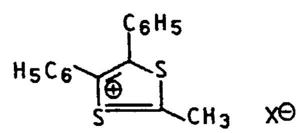 ,

(IV) (V)

wobei $R^1$ , $R^2$ und $X^{\ominus}$ jeweils die obengenannte Bedeutung besitzen, mit Aldehyden der Formel

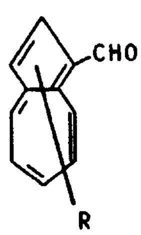 oder 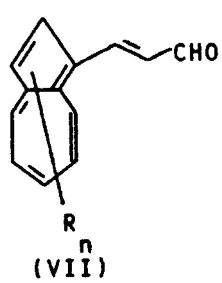

(VI) (VII)

wobei R und n jeweils die obengenannte Bedeutung besitzen, in einem inerten Lösungsmittel, gegebenenfalls unter Basenkatalyse, bei einer Temperatur von 20 bis 140 °C oder lösungsmittelfrei durch Zusammenschmelzen der obengenannten Komponenten, wobei der Aldehyd VI ausgenommen ist, bei einer Temperatur von 60 bis 100 °C hergestellt werden. Bei der Darstellung der Azulenmethinfarbstoffe der Formel I, in der A für den Rest II c steht, geht man zweckmäßig von den in situ hergestellten neutralen Enaminen der Formel IV aus.

Als inerte Lösungsmittel für die Umsetzungen kommen z. B. Methanol, Ethanol, Butanol, Acetanhydrid, Pyridin, Eisessig oder kompatible Gemische davon in Betracht.

Geeignete Basen sind z. B. Triethylamin, Tributylamin, N-Methylpiperidin oder N,N-Dimethylanilin.

Die als Ausgangsstoffe benötigten Cycloammoniumverbindungen III a - III e sowie die Verbindungen IV und V sind bekannt und beispielsweise in J.Org.Chem. USSR 18, S. 380 (1982); A.Weissberger, E.C. Taylor "Chemistry of Heterocyclic Compounds", Band 9, 1973, und Band 35, 1979, Interscience Publ.; Bull.Soc.Chim. Fr. 1959, S. 1398; oder J.Am.Chem. Soc. 83, S. 2934 (1961), beschrieben oder können nach den dort beschriebenen Verfahren hergestellt werden.

Die Aldehyde VI und VII sind ebenfalls bekannt oder können nach an sich bekannten Methoden synthetisiert werden (Aldehyd VI: Houben-Weyl, Methoden der Organischen Chemie, Bd. 5, Teil 2 c, Thieme Verlag Stuttgart, New York, 1985, 4. Aufl., S. 266 ff; Tetrahedron Lett. 1967, S. 4707; Aldehyd VII: DE-B-1 079 629).

Die neuen Azulenmethinfarbstoffe der Formel I weisen eine hohe molare Absorption im Bereich von 650 bis 850 nm auf. Sie sind in organischen Lösungsmitteln und/oder thermoplastischen oder vernetzten Kunststoffen gut löslich.

Die Erfindung betrifft weiterhin ein optisches Aufzeichnungsmedium, enthaltend einen Träger und eine gegenüber Laserlicht empfindliche, Farbstoff enthaltende Schicht, wobei der Farbstoff die Formel I aufweist.

Der Aufbau der Aufzeichnungsmedien ist an sich bekannt (siehe beispielsweise J.Vac.Sci. Technol. 18 (1), Jan./Feb. 1981, S. 105).

Als Träger kommen z. B. Glasplatten oder -scheiben, oder Kunststoffplatten oder -scheiben, insbesondere Platten oder Scheiben aus Polymethylmethacrylat, Polystyrol, Polystyrol-Copolymeren, Polyvinylchlorid, Polymethylpenten oder Polycarbonat in Betracht, die gegebenenfalls Spurrillen aufweisen.

Der Träger kann dabei die Form eines Bandes, einer quadratischen oder rechteckigen Platte oder vorzugsweise einer runden Scheibe haben, wobei die für laseroptische Aufzeichnungsmaterialien üblichen und bekannten Scheiben eines Durchmessers von 10 oder 13 cm bevorzugt werden.

Das erfindungsgemäße Aufzeichnungsmedium kann frei von Bindemitteln sein. Vorzugsweise enthält das Aufzeichnungsmedium aber ein Bindemittel. Als solche kommen beispielsweise Siliconharze, Epoxidharze, Acrylatharze, Polystyrolhomo- und -copolymerisate, Polyvinylcarbazol, Polyvinylpyrrolidon, Polyvinylestercopolymere, Polyvinylidenchloridcopolymere oder Polyvinylchlorid in Betracht.

Zwischen der lichtabsorbierenden Schicht und dem Träger kann eine reflektierende Schicht vorhanden sein, so daß das eingestrahlte und durch die farbige Schicht wandernde Licht, so weit es nicht absorbiert wird, an die Reflektorschicht reflektiert wird und nochmals durch die gefärbte Schicht wandert.

Die Belichtung kann auch durch ein transparentes Substrat erfolgen. Als Schichtfolge kommt dann die Anordnung Substrat-Absorberschicht-gegebenenfalls Reflektorschicht in Betracht.

Geeignete lichtreflektierende Materialien sind z. B. Aluminium, Rhodium, Gold, Zinn, Blei, Wismut, Kupfer oder dielektrische Spiegel. Die lichtreflektierende Schicht sollte so dick sein, daß sie das zur Aufnahme oder zum Abtasten benutzte Licht möglichst vollständig reflektiert.

Für diesen Zweck sind Spiegel mit geringer Wärmeleitfähigkeit vorteilhaft. Der Träger oder die lichtreflektierende Schicht müssen eine optisch glatte, ebene Oberfläche aufweisen und an der Oberfläche so beschaffen sein, daß die absorbierende Schicht darauf fest haftet. Um die Oberflächenqualität und Adhäsionsphänomene günstig zu beeinflussen kann der Träger und/oder der Reflektor mit einer Glättungsschicht aus einem duroplastischen oder thermoplastischen Material versehen werden.

Für den Fall, daß das das optische Aufzeichnungsmedium einen metallischen Reflektor aufweist, erfolgt das Aufbringen der metallischen Reflektionsschicht vorzugsweise nach bekannten Methoden, z. B. durch Aufdampfen im Vakuum oder auch durch Aufbringen geeigneter Metallfolien auf den Träger.

Das erfindungsgemäße Aufzeichnungsmedium wird durch Aufschleudern einer Lösung, enthaltend einen Farbstoff der Formel I, gegebenenfalls ein polymeres Bindemittel und ein Lösungsmittel, auf einen Träger aufgebracht und die Schicht an der Luft getrocknet. Der Film kann auch im Vakuum, bei erhöhter Temperatur oder gegebenenfalls mit Strahlung getrocknet werden.

Als geeignete Lösungsmittel sind z. B. 1,1,2-Trichlorethan, Methylethylketon, Diacetonalkohol, Toluol, Methanol, Ethanol, Propanol oder deren Gemische zu nennen.

Gegebenenfalls kann die aufzuschleudernde Lösung Additive, wie Antioxidantien, Singulett-Sauerstoff-Quencher oder UV-Absorber enthalten.

Es ist weiterhin auch möglich, auf die Farbstoff-in-Polymer-Schicht eine Schutzschicht aufzubringen, Hierzu bieten sich eine Reihe von Polymeren an, welche durch Aufschleudern, Aufrakeln, Tauchen von gelösten Polymeren oder durch Aufdampfen im Vakuum, insbesondere von fluorierten Polymeren, eine Schutzschicht bilden können.

Wenn das Aufzeichnungssystem aus zwei gleichen oder verschiedenen Aufzeichnungsmedien in Form eines "Sandwich" aufgebaut wird, kann im allgemeinen auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz- und/oder Zwischenschicht kann bei ausreichender Qualität des optischen Aufzeichungsmediums überlicherweise verzichtet werden. Wenn aber auf Zwischenschichten nicht verzichtet werden kann, muß unter Berücksichtigung des Brechungsindex des dazu verwendeten Materials und der verwendeten Laserlichtwellenlänge deren Schichtdicke so gewählt werden, daß keine störenden Interferenzen auftreten können.

Das erfindungsgemäße optische Aufzeichnungsmedium weist bei der Wellenlänge der kommerziell erhältlichen Halbleiterlaser (ca. 650 bis 900 nm) eine hohe Absorption auf. Die Farbstoff-in-Polymer-Systeme können auf eine lichtreflektierende Schicht so aufgebracht werden, daß sich glatte, homogene Absorptionsschichten hoher optischer Qualität ergeben, die eine günstige Schwellenenergie besitzen, und in die die zu speichernde Information in Form von Pits eingeschrieben werden kann, wodurch ein ausgezeichnetes Signal : Rausch-Verhältnis resultiert.

Die Aufzeichungsmedien gemäß der vorliegenden Erfindung sind mit einem Halbleiter-Laser beschreibbar und lesbar. Aufzeichnungsmedien gemäß der Erfindung sind gegenüber atmosphärischen Einflüssen und Tageslicht sehr stabil.

Aufgrund der hohen Lichtabsorption der Azulenmethinfarbstoffe der Formel I sind die neuen Aufzeichungsmedien sehr empfindlich gegenüber dem Licht von im nahen Infrarot emittierenden Festkörper-Injektionslasern. Insbesondere ist hier der AlGaAs-Laser zu nennen, der im Wellenlängenbereich von 750 bis 950 nm arbeitet. Aufgrund der geringen Größe des Bauelementes, seines geringen Energiebedarfs und der Möglichkeit der direkten Modulation der optischen Ausgangsleistung durch Modulation des elektrischen Antriebsstromes eignen sich solche Lasertypen besonders gut.

Die folgenden Beispiele sollen die Erfindung näher erläutern.

A) Herstellung der Farbstoffe

Beispiel 1

9,6 g (22 mmol) 9-Methyl-10-(3,6-dioxaoctyl)acridiniumiodid wurden in 200 ml Acetanhydrid gelöst, mit 5,0 g (22 mmol) Guajazulen-1-aldehyd versetzt und anschließend 4 Stunden unter Rühren auf 80 °C erhitzt. Nach dem Abkühlen goß man die Reaktionslösung in 1 l Diethylether und saugte ab. Der so erhaltene Farbstoff wurde mehrfach mit Diethylether gewaschen und dann unter vermindertem Druck getrocknet. Man erhielt einen Farbstoff der Formel

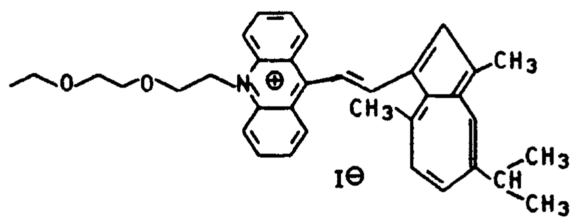

Ausbeute: 13,2 g (92 % d. Th.); Schmp.: 140 °C (Zers.); $\lambda_{max}$ 740 nm (in $CH_2Cl_2$)

Beispiel 2

0,9 g (2 mmol) 9-Methyl-10-(2-hydroxyoctyl)acridiniumiodid wurden in 20 ml Ethanol gelöst, mit 0,45 g (2 mmol) Guajazulen-1-aldehyd und 0,2 g (2 mmol) Triethylamin versetzt und anschließend 4 Stunden unter Rühren auf 80 °C erhitzt. Nach dem Abkühlen goß man die Reaktionslösung in 1 l Diethylether und saugte ab. Der so erhaltene Farbstoff wurde mehrfach mit Diethylether gewaschen und dann unter vermindertem Druck getrocknet. Man erhielt einen Farbstoff der Formel

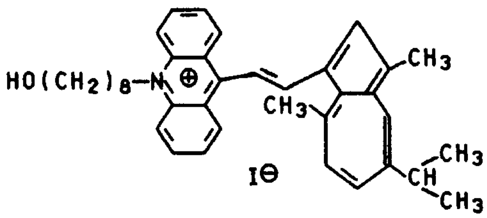

Ausbeute: 0,7 g (54 % d. Th.); $\lambda_{max}$ 742 nm (in $CH_2Cl_2$)
Die in der folgenden Tabelle aufgeführten Farbstoffe wurden analog Beispiel 1 oder 2 hergestellt. Das bei der Bestimmung des Absorptionsmaximums $\lambda_{max}$ verwendete Lösungsmittel ist ebenfalls angegeben.

| Bsp. | Farbstoff | $\lambda$max [nm] | Lösungsmittel |
|---|---|---|---|
| 3 | 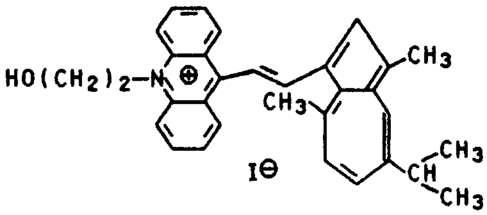 | 742 | $CH_2Cl_2$ |

| Bsp. | Farbstoff | λmax [nm] | Lösungsmittel |
| --- | --- | --- | --- |
| 4 | 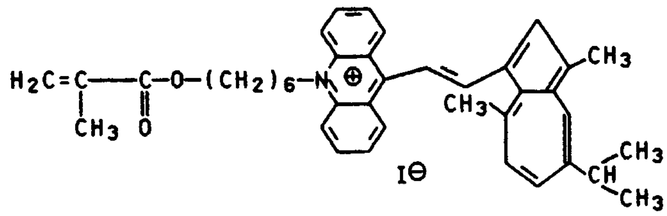 | 742 | $CH_2Cl_2$ |
| 5 | 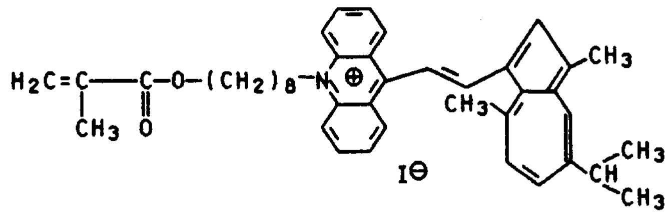 | 742 | $CH_2Cl_2$ |
| 6 | 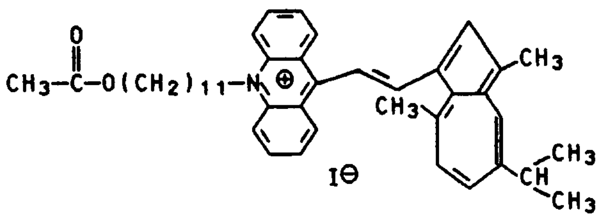 | 742 | $CH_2Cl_2$ |
| 7 | 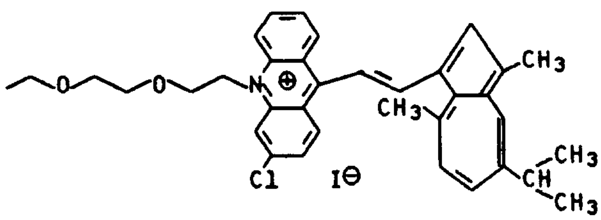 | 742 | $CH_2Cl_2$ |
| 8 | 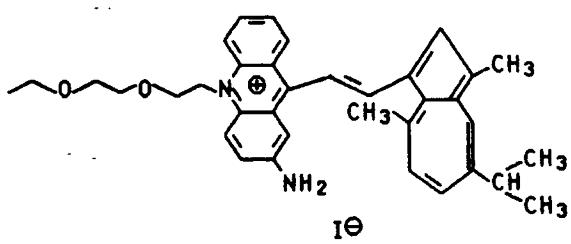 | 747 | $CH_2Cl_2$ |
| 9 | 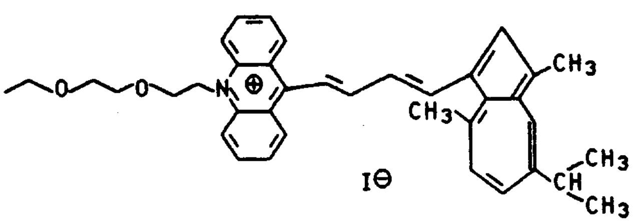 | 847 | $CH_2Cl_2$ |

| Bsp. | Farbstoff | $\lambda$max [nm] | Lösungsmittel |
|---|---|---|---|
| 10 | 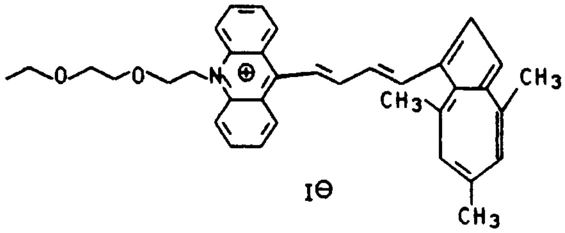 | 815 | $CH_2Cl_2$ |
| 11 | 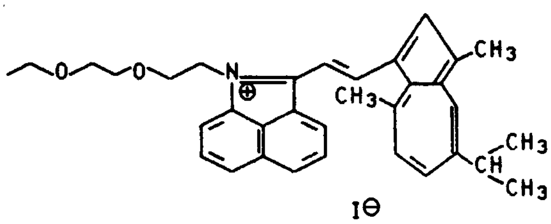 | 711 | $C_2H_5OH$ |
| 12 | 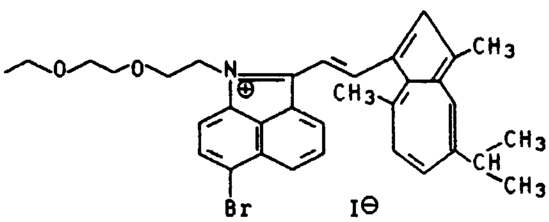 | 737 | $CH_2Cl_2$ |
| 13 | 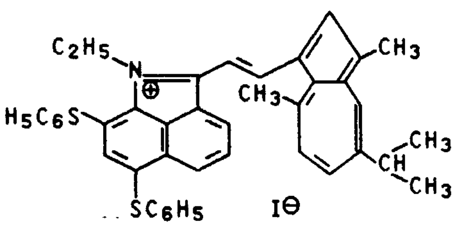 | 772 | $CH_2Cl_2$ |
| 14 | 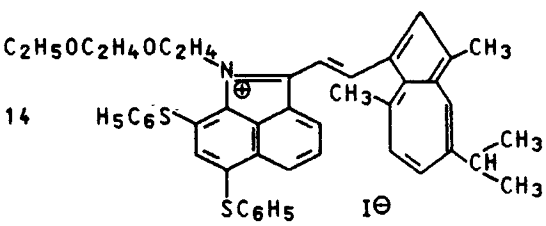 | 776 | $CH_2Cl_2$ |
| 15 | 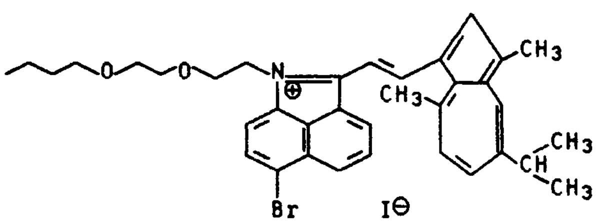 | 735 | $CH_2Cl_2$ |

| Bsp. | Farbstoff | λmax [nm] | Lösungsmittel |
|---|---|---|---|
| 16 | 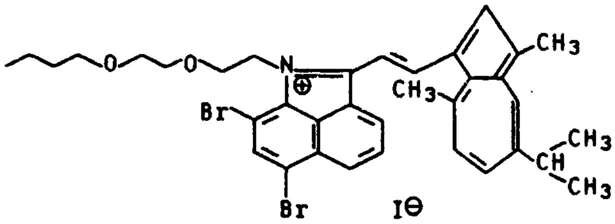 | 740 | $CH_2Cl_2$ |
| 17 | 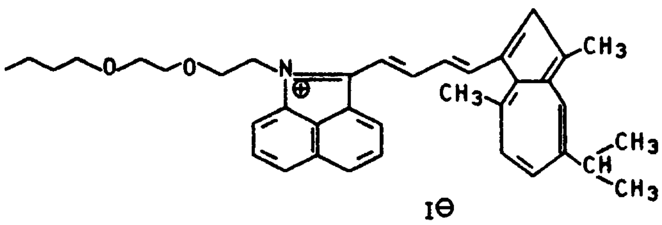 | 811 | $CH_2Cl_2$ |
| 18 | 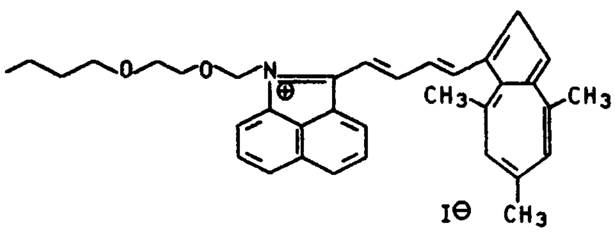 | 794 | $CH_3Cl_2$ |
| 19 | 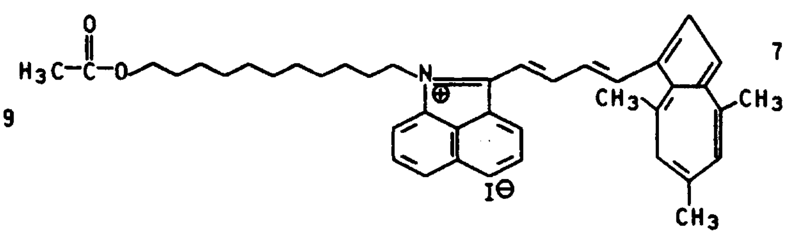 | 794 | $CH_2Cl_2$ |
| 20 | 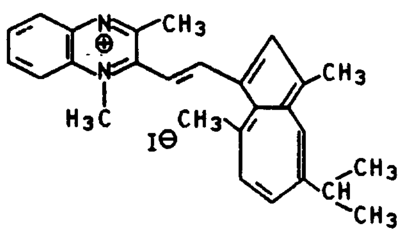 | 672 | $CH_2Cl_2$ |
| 21 | 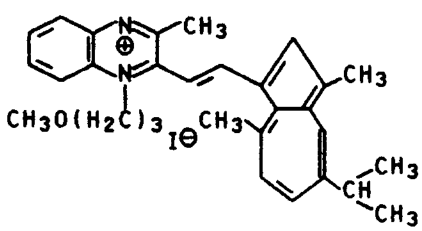 | 663 | $CH_2Cl_2$ |

| Bsp. | Farbstoff | λmax [nm] | Lösungsmittel |
|---|---|---|---|
| 22 | 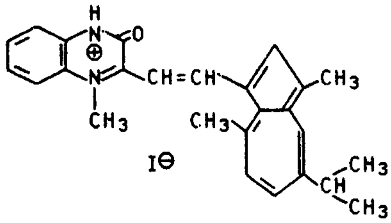 | 646 | $CH_2Cl_2$ |
| 23 | 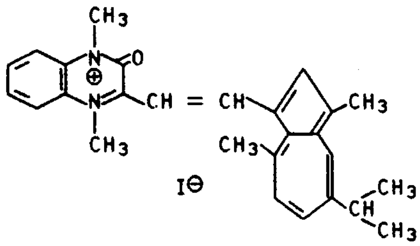 | 658 | $CH_2Cl_2$ |
| 24 | 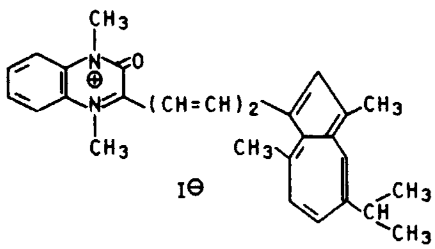 | 744 | $CH_2Cl_2$ |
| 25 | 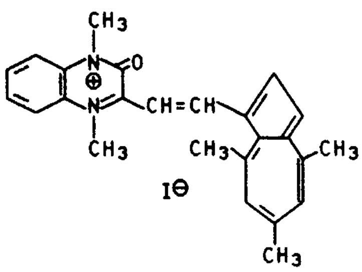 | 608 | $CH_2Cl_2$ |
| 26 | 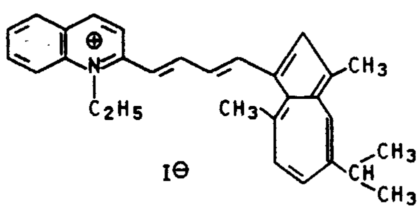 | 695 | $CH_2Cl_2$ |
| 27 | 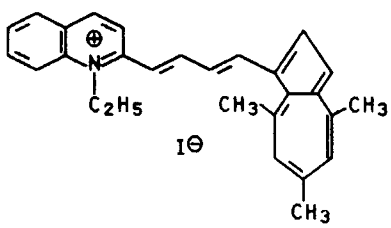 | 640 | $CH_2Cl_2$ |

| Bsp. | Farbstoff | λmax [nm] | Lösungsmittel |
| --- | --- | --- | --- |
| 27 | 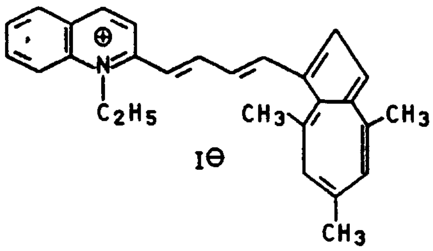 | 640 | $CH_2Cl_2$ |
| 28 | 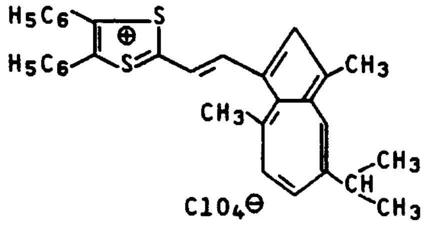 | 682 | $CH_2Cl_2$ |
| 29 | 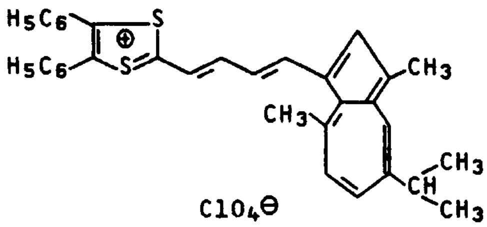 | 721 | $CH_2Cl_2$ |
| 30 | 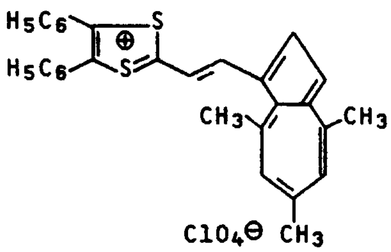 | 622 | $CH_2Cl_2$ |
| 31 | 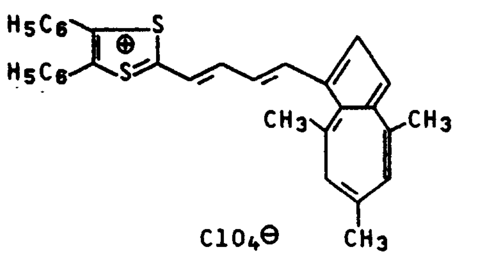 | 654 | $CH_2Cl_2$ |

B) Herstellung des optischen Aufzeichungsmediums

0,219 g eines Copolymeren aus Methylmethacrylat/Methacrylsäure (70 : 30) wurden in 2,99 g Diacetonalkohol und 3,15 g Aceton gelöst und 0,1365 g Farbstoff Nr. 1 zugesetzt. Nach 1 Stunde Rühren bei Raumtemperatur wurde filtriert und die Lösung bei 1800 Upm auf ein Substrat aus Polymethylmethacrylat geschleudert.

Die so erhaltene Schicht ist homogen und ohne Fehler. Die Schichtdecke beträgt 116 nm und weist eine breite Absorptionsbande auf. Bei 830 nm beträgt die Extinktion 0,18.

Mit einem auf einem Drehtisch montierten AlGaAs-Laser (λ = 820 nm) wurden einzelne, etwa 1 μ große Löcher in die aktive Schicht geschrieben. Die Empfindlichkeit der Schicht war besser als 1 nJ/Loch.

Beim Auslesen der Punkte wurde ein ausgezeichnetes Signal : Rausch-Verhältnis gefunden.

## Patentansprüche

1. Azulenmethinfarbstoffe der Formel I

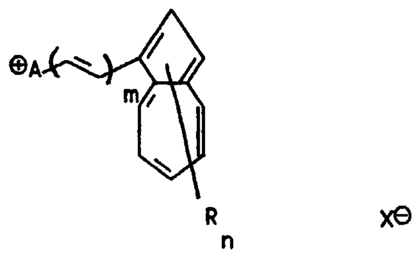

(I) ,

in der

R $C_1$-$C_6$-Alkyl, das gegebenenfalls durch Halogen, Cyano, Amino oder $C_1$-$C_6$-Alkoxy substituiert ist,

$X^{\ominus}$ ein Anion,

$A^{\oplus}$ einen heterocyclischen Rest der Formel

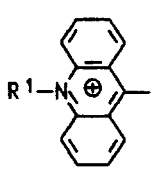 , 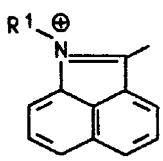 , 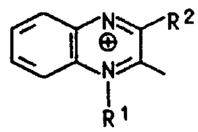 , 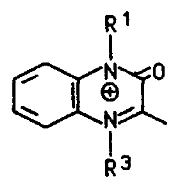 ,

(II a) (II b) (II c) (II d)

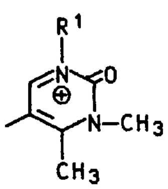 , 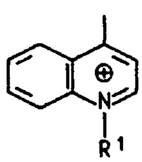 , 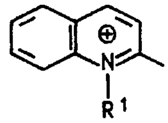 , 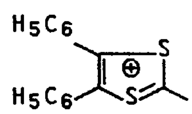 ,

(II e) (II f) (II g) (II h)

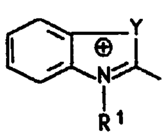 , 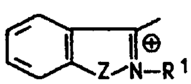 oder 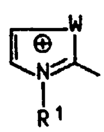 ,

(II i) (II j) (II k)

wobei $R^1$ für gegebenenfalls substituiertes und/oder durch ein oder mehrere Sauerstoffatome unterbrochenes $C_1$-$C_{22}$-Alkyl oder gegebenenfalls substituiertes $C_5$-$C_7$-Cycloalkyl, $R^2$ für Wasserstoff, $C_1$-$C_4$-Alkyl oder Cyano, $R^3$ für $C_1$-$C_4$-Alkyl, Y für Stickstoff, Sauerstoff, Schwefel, Selen oder $(CH_3)_2C<$ , Z für Schwefel oder Selen und W für Stickstoff, Schwefel, Selen oder -CH = CH- stehen und der heterocyclische Rest $A^{\oplus}$ gegebenenfalls weiter substituiert und/oder benzoanelliert ist,

n die Zahl 1, 2 oder 3 und

m die Zahl 1 oder 2 bedeuten, mit der Maßgabe, daß wenn $A^{\oplus}$ für einen Rest der Formel II f, II g, II i oder II k steht, m die Bedeutung von 2 besitzt.

**2.** Azulenmethinfarbstoffe gemäß Anspruch 1, dadurch gekennzeichnet, daß
R $C_1$-$C_3$-Alkyl,
$R^1$ $C_1$-$C_{22}$-Alkyl, das gegebenenfalls durch 1 bis 3 Sauerstoffatome unterbrochen ist, $C_1$-$C_{22}$-Bromalkyl, $C_1$-$C_{12}$-Hydroxyalkyl, $C_1$-$C_{12}$-Methacryloyloxyalkyl, $C_1$-$C_{12}$-Hydroxysulfonylalkyl, $C_1$-$C_6$-Carboxyalkyl oder ($C_1$-$C_4$-Alkoxycarbonyl)-$C_1$-$C_6$-alkyl,
m die Zahl 1 oder 2 und
n die Zahl 3 bedeuten.

**3.** Azulenmethinfarbstoffe gemäß Anspruch 1, dadurch gekennzeichnet, daß $A^{\oplus}$ einen heterocyclischen Rest der Formel II a, II b, II c, II d, II f,II g oder II h bedeutet, der gegebenenfalls jeweils durch Amino, Hydroxysulfonyl, Chlor, Brom oder Phenylthio substituiert ist.

**4.** Optisches Aufzeichnungsmedium, enthaltend einen Träger und eine gegenüber Laserlicht empfindliche, Farbstoff enthaltende Schicht, dadurch gekennzeichnet, daß der Farbstoff ein Azulenmethinfarbstoff der Formel I

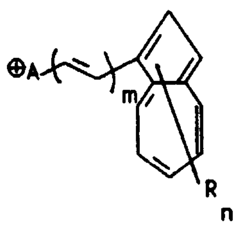

(I)

$X^{\ominus}$

ist, in der
R $C_1$-$C_6$-Alkyl, das gegebenenfalls durch Halogen, Cyano, Amino oder $C_1$-$C_6$-Alkoxy substituiert ist,
$X^{\ominus}$ ein Anion,
$A^{\oplus}$ einen heterocyclischen Rest der Formel

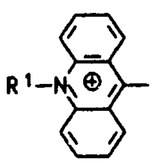 , 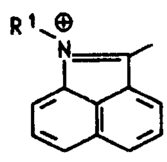 , 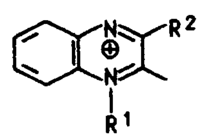 , 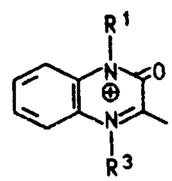 ,

(II a) (II b) (II c) (II d)

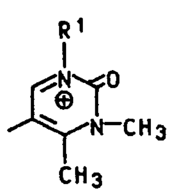 , 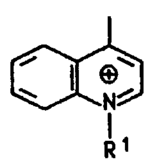 , 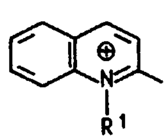 , 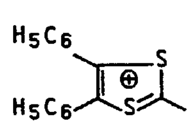 ,

(II e) (II f) (II g) (II h)

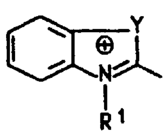 , 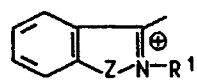 oder 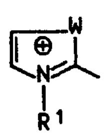 ,

(II i) (II j) (II k)

wobei $R^1$ für gegebenenfalls substituiertes und/oder durch ein oder mehrere Sauerstoffatome unterbrochenes $C_1$-$C_{22}$-Alkyl oder gegebenenfalls substituiertes $C_5$-$C_7$-Cycloalkyl, $R^2$ für Wasserstoff, $C_1$-$C_4$-Alkyl oder Cyano, $R^3$ für $C_1$-$C_4$-Alkyl, Y für Stickstoff, Sauerstoff, Schwefel, Selen oder
$(CH_3)_2C<$ , Z für Schwefel oder Selen und W für Stickstoff,
Schwefel, Selen oder -CH = CH- stehen und der heterocyclische Rest $A^{\oplus}$ gegebenenfalls weiter substituiert und/oder benzoanelliert ist,

n die Zahl 1, 2 oder 3 und
m die Zahl 1 oder 2 bedeuten, mit der Maßgabe, daß wenn

$A^{\oplus}$ für einen Rest der Formel II f, II g, II i oder II k steht, m die Bedeutung von 2 besitzt.

**5.** Optisches Aufzeichungsmedium gemäß Anspruch 4, dadurch gekennzeichnet, daß
- R $C_1$-$C_3$-Alkyl,
- $R^1$ $C_1$-$C_{22}$-Alkyl, das gegebenenfalls durch 1 bis 3 Sauerstoffatome unterbrochen ist, $C_1$-$C_{22}$-Bromalkyl, $C_1$-$C_{12}$-Hydroxyalkyl, $C_1$-$C_{12}$-Methacryloyloxyalkyl, $C_1$-$C_{12}$-Hydroxysulfonylalkyl, $C_1$-$C_6$-Carboxyalkyl oder ($C_1$-$C_4$-Alkoxycarbonyl)-$C_1$-$C_6$-alkyl,
- m die Zahl 1 oder 2 und
- n die Zahl 3 bedeuten.

**6.** Optisches Aufzeichnungsmedium gemäß Anspruch 4, dadurch gekennzeichnet, daß $A^{\oplus}$ einen heterocyclischen Rest der Formel II a, II b, II c, II d, II f, II g oder II h bedeutet, der gegebenenfalls jeweils durch Amino, Hydroxysulfonyl, Chlor, Brom oder Phenylthio substituiert ist.

## Claims

**1.** An azulenemethine dye of the formula I

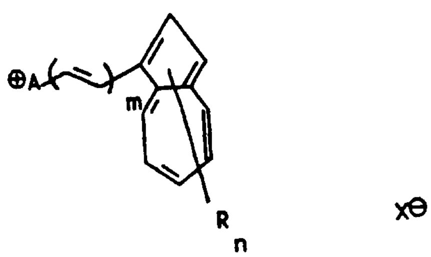

(I)

where R is $C_1$-$C_6$-alkyl which is unsubstituted or substituted by halogen, cyano, amino or $C_1$-$C_6$-alkoxy, $X^{\ominus}$ is an anion, $A^{\oplus}$ is a heterocyclic radical of the formula

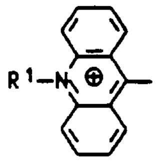 , 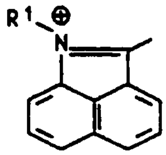 , 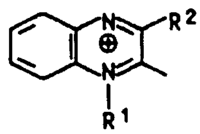 , 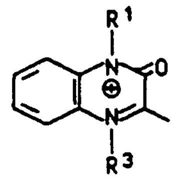 ,

(II a) (II b) (II c) (II d)

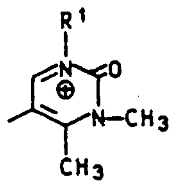 , 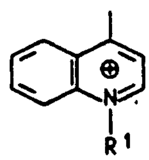 , 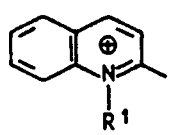 , 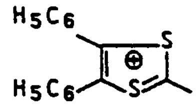 ,

(II e) (II f) (II g) (II h)

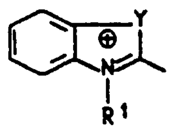 , 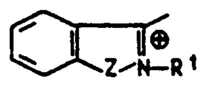 or 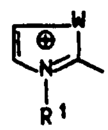 ,

(II i) (II j) (II k)

$R^1$ is $C_1$-$C_{22}$-alkyl which is unsubstituted or substituted and/or interrupted by one or more oxygen atoms or is unsubstituted or substituted $C_5$-$C_7$-cycloalkyl, $R^2$ is hydrogen, $C_1$-$C_4$-alkyl or cyano, $R^3$ is $C_1$-$C_4$-alkyl, Y is nitrogen, oxygen, sulfur, selenium or $(CH_3)_2C\langle$ , Z is sulfur or selenium and W is nitrogen, sulfur, selenium or -CH=CH- and the heterocyclic radical $A^{\oplus}$ may be further substituted and/or benzofused, n is 1, 2 or 3 and m is 1 or 2, with the proviso that, when $A^{\oplus}$ is a radical of the formula II f, II g, II i or II k, m is 2.

**2.** An azulenemethine dye as claimed in claim 1, wherein R is $C_1$-$C_3$-alkyl, $R^1$ is $C_1$-$C_{22}$-alkyl which may be interrupted by 1 to 3 oxygen atoms, or is $C_1$-$C_{22}$-bromoalkyl, $C_1$-$C_{12}$-hyroxyalkyl, $C_1$-$C_{12}$-methacryloyloxyalkyl, $C_1$-$C_{12}$-hydroxysulfonylalkyl, $C_1$-$C_6$-carboxyalkyl or ($C_1$-$C_4$-alkoxycarbonyl)-$C_1$-$C_6$-alkyl, m is 1 or 2 and n is 3.

**3.** An azulenemethine dye as claimed in claim 1, wherein $A^{\oplus}$ is a heterocyclic radical of the formula II a, II b, II c, II d, II f, II g or II h, each of which is unsubstituted or substituted by amino, hydroxysulfonyl, chlorine, bromine or phenylthio.

**4.** An optical recording medium, containing a substrate and a dye-containing layer which is sensitive to laser light, wherein the dye is an azulenemethine dye of the formula I

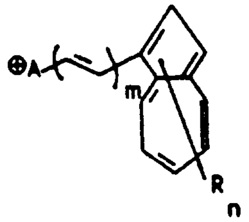 $X^{\ominus}$ (I)

where R is $C_1$-$C_6$-alkyl which is unsubstituted or substituted by halogen, cyano, amino or $C_1$-$C_6$-alkoxy, $X^{\ominus}$ is an anion, $A^{\oplus}$ is a heterocyclic radical of the formula

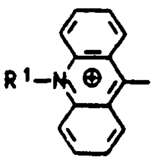 , 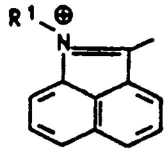 , 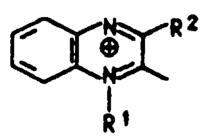 , 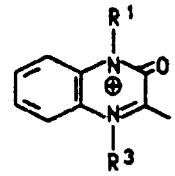 ,

(II a) (II b) (II c) (II d)

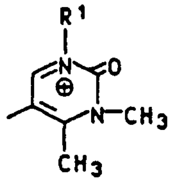 , 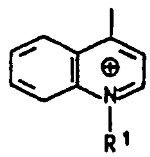 , 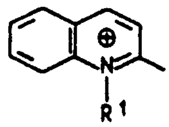 , 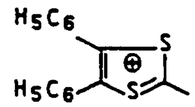 ,

(II e) (II f) (II g) (II h)

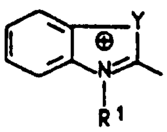 , 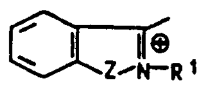 or 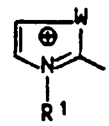 ,

(II i) (II j) (II k)

$R^1$ is $C_1$-$C_{22}$-alkyl which is unsubstituted or substituted and/or interrupted by one or more oxygen atoms or is unsubstituted or substituted $C_5$-$C_7$-cycloalkyl, $R^2$ is hydrogen, $C_1$-$C_4$-alkyl or cyano, $R^3$ is $C_1$-$C_4$-alkyl, Y is nitrogen, oxygen, sulfur, selenium or $(CH_3)_2C\langle$ , Z is sulfur or selenium and W is nitrogen, sulfur, selenium or -CH=CH- and the heterocylic radical $A^{\oplus}$ may be further substituted and/or benzofused, n is 1, 2 or 3 and m is 1 or 2, with the proviso that, when $A^{\oplus}$ is a radical of the formula II f, II g, II i or II k, m is 2.

**5.** An optical recording medium as claimed in claim 4, wherein R is $C_1$-$C_3$-alkyl, $R^1$ is $C_1$-$C_{22}$-alkyl which may be interrupted by 1 to 3 oxygen atoms, or $C_1$-$C_{22}$-bromoalkyl, $C_1$-$C_{12}$-hydroxyalkyl, $C_1$-$C_{12}$-methacryloyloxyalkyl, $C_1$-$C_{12}$-hydroxysulfonylalkyl, $C_1$-$C_6$-carboxyalkyl or ($C_1$-$C_4$-alkoxycarbonyl)-$C_1$-$C_6$-alkyl, m is 1 or 2 and n is 3.

**6.** An optical recording medium as claimed in claim 4, wherein $A^{\oplus}$ is a heterocyclic radical of the formula II a, II b, II c, II d, II f, II g or II h, each of which is unsubstituted or substituted by amino, hydroxysulfonyl, chlorine, bromine or phenylthio.

**Revendications**

**1.** Colorants azulèneméthiniques de la formule I

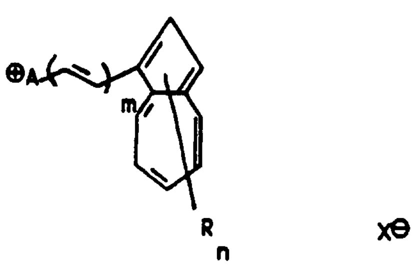

(I) ,

dans laquelle

R représente un radical alkyle en $C_1$ à $C_6$, éventuellement substitué par des atomes d'halogènes, des radicaux cyano, amino ou alcoxy en $C_1$ à $C_6$,

$X^{\ominus}$ représente un anion,

$A^{\oplus}$ représente un radical hétérocyclique de la formule

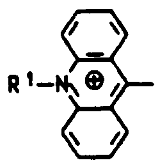 ,
(II a)

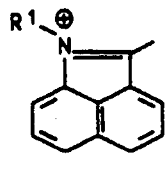 ,
(II b)

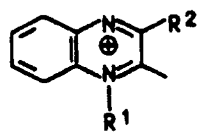 ,
(II c)

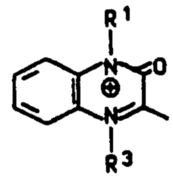 ,
(II d)

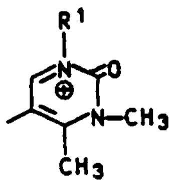 ,
(II e)

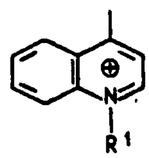 ,
(II f)

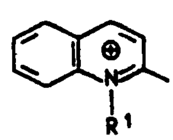 ,
(II g)

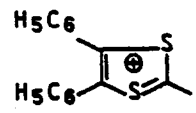 ,
(II h)

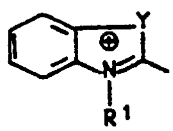 ,
(II i)

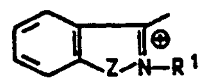 oder
(II j)

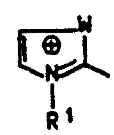 ,
(II k)

où $R^1$ représente un radical alkyle en $C_1$ à $C_{22}$ éventuellement substitué et/ou interrompu par un ou plusieurs atomes d'oxygène, ou un radical cycloalkyle en $C_5$ à $C_7$ éventuellement substitué, $R^2$ représente un atome d'hydrogène, un radical alkyle en $C_1$ à $C_4$ ou un radical cyano, $R^3$ représente un radical alkyle en $C_1$ à $C_4$, Y représente un atome d'azote, d'oxygène, de soufre, de sélénium ou le radical $(CH_3)_2C<$ , Z représente un atome de soufre ou de sélénium et W représente un atome d'azote, de soufre, de sélénium ou le radical -CH = CH- et le groupe hétérocyclique $A^{\oplus}$ est éventuellement davantage substitué et/ou benzocondensé,

n est égal à 1, 2 ou 3 et

m est égal à 1 ou à 2, avec la condition que lorsque $A^{\oplus}$ représente un reste de la formule IIf, IIg, IIi ou IIk, m soit égal à 2.

2. Colorants azulèneméthiniques suivant la revendication 1, caractérisés en ce que

R représente un radical alkyle en $C_1$ à $C_3$

$R^1$ représente un radical alkyle en $C_1$ à $C_{22}$, éventuellement interrompu par 1 à 3 atomes d'oxygène, un radical bromalkyle en $C_1$ à $C_{22}$, hydroxyalkyle en $C_1$ à $C_{12}$, méthacryloyloxyalkyle en $C_1$ à $C_{12}$, hydroxysulfonylalkyle en $C_1$ à $C_{12}$, carboxyalkyle en $C_1$ à $C_6$, ou (alcoxy-($C_1$ à $C_4$)carbonyl)-alkyle en $C_1$ à $C_6$,

m est égal à 1 ou à 2 et

n est égal à 3.

3. Colorants azulèneméthiniques suivant la revendication 1, caractérisés en ce que $A^{\oplus}$ représente un radical hétérocyclique de la formule IIa, IIb, IIc, IId, IIf, IIg ou IIh, qui est éventuellement substitués à chaque fois par des radicaux amino, hydroxysulfonyle, phénylthio ou des atomes de chlore ou de brome.

4. Milieu d'enregistrement optique, qui contient un support et une couche contenant un colorant sensible à la lumière laser, caractérisé en ce que le colorant est un colorant azulèneméthinique de la formule I

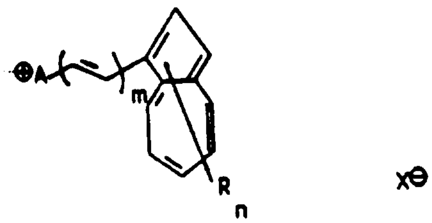

(I)

dans laquelle

R représente un radical alkyle en $C_1$ à $C_6$, éventuellement substitué par des atomes d'halogènes, des radicaux cyano, amino ou alcoxy en $C_1$ à $C_6$,

$X^\ominus$ représente un anion,

$A^\oplus$ représente un radical hétérocyclique de la formule

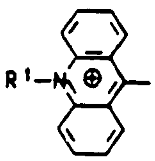 , 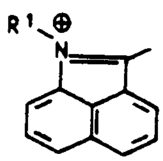 , 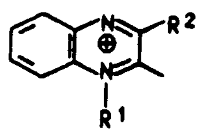 , 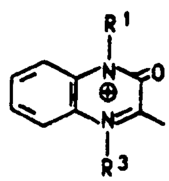 ,

(II a) (II b) (II c) (II d)

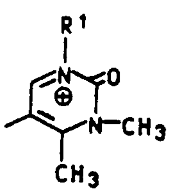 , 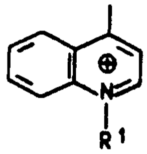 , 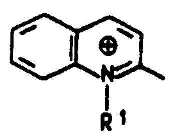 , 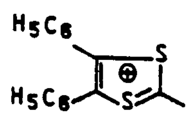 ,

(II e) (II f) (II g) (II h)

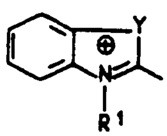 , 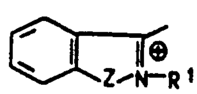 oder 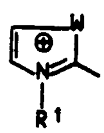 ,

(II i) (II j) (II k)

où $R^1$ représente un radical alkyle en $C_1$ à $C_{22}$ éventuellement substitué et/ou interrompu par un ou plusieurs atomes d'oxygène, ou un radical cycloalkyle en $C_5$ à $C_7$ éventuellement substitué, $R^2$ représente un atome d'hydrogène, un radical alkyle en $C_1$ à $C_4$ ou un radical cyano, $R^3$ représente un radical alkyle en $C_1$ à $C_4$, Y représente un atome d'azote, d'oxygène, de soufre, de sélénium ou le radical $(CH_3)_2C\langle$ , Z représente un atome de soufre ou de sélénium et W représente un atome d'azote, de soufre, de sélénium ou le radical -CH = CH- et le groupe hétérocyclique $A^\oplus$ est éventuellement davantage substitué et/ou benzocondensé,

n est égal à 1, 2 ou 3 et

m est égal à 1 ou à 2, avec la condition que lorsque $A^\oplus$ représente un reste de la formule IIf, IIg, IIi ou IIk, m soit égal à 2.

**5.** Milieu d'enregistrement optique suivant la revendication 4, caractérisés en ce que

- R représente un radical alkyle en $C_1$ à $C_3$
- $R^1$ représente un radical alkyle en $C_1$ à $C_{22}$, éventuellement interrompu par 1 à 3 atomes d'oxygène, un radical bromalkyle en $C_1$ à $C_{22}$, hydroxyalkyle en $C_1$ à $C_{12}$, méthacryloyloxyalkyle en $C_1$ à $C_{12}$, hydroxysulfonylalkyle en $C_1$ à $C_{12}$, carboxyalkyle en $C_1$ à $C_6$, ou (alcoxy-($C_1$ à $C_4$)carbonyl)-alkyle en $C_1$ à $C_6$,
- m est égal à 1 ou à 2 et
- n est égal à 3.

**6.** Milieu d'enregistrement optique suivant la revendication 4, caractérisés en ce que $A^{\oplus}$ représente un radical hétérocyclique de la formule IIa, IIb, IIc, IId, IIf, IIg ou IIh, qui est éventuellement substitués à chaque fois par des radicaux amino, hydroxysulfonyle, phénylthio ou des atomes de chlore ou de brome.